# EUROPEAN PATENT APPLICATION

(11) **EP 4 796 925 A1**
(43) Date of publication of application: **26.08.2026**
(21) Application number: 26159653.0
(22) Date of filing: 19.02.2026
(51) Int. Cl.: G01N 30/60

(54) **CHROMATOGRAPHY COLUMN HEIGHT-LOCKING MECHANISM**

(30) Priority: 21.02.2025 US 202563761459 P
(71) Applicant: Diba Industries, Inc., Danbury, CT 06810 (US)
(72) Inventor: SIMPSON, Allan Clive, Danbury, Connecticut 06810 (US); WRIGHT, Paul Justin, Danbury, Connecticut 06810 (US)
(74) Representative: Wittmer, Maximilian

(57) **Abstract**

An adapter assembly (120) for a chromatography column (100) comprises an inner end cap (122), an outer end cap (124) coupled to the inner end cap (122), and an inlet end piece (140) coupled to the inner end cap (122). The inlet endpiece (140) is axially constrained with respect to the inner end cap (122) such that rotation of the inner end cap (122) causes axial movement of the inlet endpiece (140) within a main tube (111) of the main tube assembly (110). The adapter assembly (120) further comprises a translating member (150) slidably coupled to the outer end cap (124) to allow movement of the translating member (150) in a transverse direction of the adapter assembly (120). When the translating member (150) is in an engaged position, the inner end cap (122) and the outer end cap (124) are rotationally unconstrained and when the translating member (150) is in a disengaged position, the inner end cap (122) and the outer end cap (124) are rotationally constrained with respect to each other.

## Description

### FIELD

The present disclosure is generally directed to chromatography columns and, more particularly, to a chromatography column height-locking mechanism.

### TECHNICAL BACKGROUND

Liquid chromatography, typically performed using chromatography columns, is a widely used technique for separating components of a mixture. The separation occurs based on the differing interactions in which each component of the mixture has with mobile and stationary phases employed in the technique. The mobile phase carrying the mixture is forced to migrate through the stationary phase, which effects separation of components in the mixture. Owing to the many different combinations of stationary and mobile phases that can be utilized, the technique is versatile and can be used in an array of applications of varying scales from microscale separations in analytical chemistry to large-scale industrial purifications.

Chromatography columns typically incorporate a main tube with one end serving as a fluid inlet that allows for the delivery of the sample in the mobile phase, and the other end serving as a fluid outlet that allows for the fractionated sample, carried by the eluent, to exit the column. The main tube is capped at each end and functions as a reservoir for containing the stationary phase. The stationary phase is loaded via a process called packing to form a packed bed, and typically comprises alumina, silica, or synthetic or natural polymer gel resin beads ranging in size from one micron to several hundred microns in diameter. However, while chromatography columns are widely used to carry out separations, existing column constructs and formats have several drawbacks and limitations creating opportunities for improvement with respect to the chromatographic performance and operation of the columns.

### SUMMARY

The present application addresses these opportunities by providing design improvements which increase the chromatographic performance and operability of chromatography columns.

During typical operation of a chromatography column, liquid, typically from a single tube, is introduced to the column and distributed over the surface of the packed bed. When a desired flow of liquid is established through the packed bed, a bolus of sample (a mixture of desired components and contaminants) is introduced into the flow and then enters the chromatography column. This bolus is in the form of a column of sample liquid travelling through in an inlet tube and being subjected to equal pressure across its cross section (apart from the stationary liquid boundary layer in contact with the inner wall of the tube). Upon arrival at the head of the packed bed, this column of liquid needs to be converted into a flat disc of sample liquid for entering the packed bed. This transition involves a change in the physical characteristics of the fluid liquid as the fluid flows from the inlet tube to an exponentially larger column (e.g., from a diameter of about 0.3 mm to about 100 mm or larger). This disc must be as thin and flat as possible, taking into account the diameter of the packed bed. Any pressure or flow differential across the disc can lead to dilution of the formed disc and may compromise the chromatographic performance of the packed bed in terms of both the ability of the packed bed to maintain a flat and narrow disc of sample bolus as well as the ability of the packed bed to efficiently separate components of the sample bolus into separate discs. Additionally, when flow of the elution liquid which follows the sample bolus is compositionally varied with time (gradually or with step changes), it is important for this compositional variation (e.g., buffer strength, ionic strength, concentrations, mobile phase components, etc.) to be uniform across the cross-section of the packed bed. In other words, as with the sample bolus, liquid columns of elution liquid having differing compositions must also be converted into succeeding flat discs for entering the packed bed.

The chromatographic performance of the packed bed in a chromatography column may be improved by ensuring that the liquid (e.g., the sample bolus and elution buffers/solvents) is introduced to the bed surface in a manner that avoids the mixing of the succeeding flat discs that enter the packed bed. Moreover, the performance of the chromatography column in terms of the flow and sample integrity may be improved by avoiding over compression of the bed and the creation of voids above the surface of the packed bed. In conventional chromatography columns, a central cylindrical bore is provided through an endpiece at the fluid inlet side of the main tube where fluid delivered through the cylindrical bore is radially distributed within a thin gap region provided between the terminal end of the cylindrical bore and a bed support frit or mesh. The axial position of the inlet endpiece within the column is typically adjusted by rotating a component that is rigidly fixed to the inlet endpiece and in threaded engagement with the inlet side of the column. However, the packed bed may be damaged and compacted if a user moves the endpiece too far into the column thereby over compressing the bed. In order to lock the endpiece at a particular axial position associated with a desired bed height, some existing chromatography columns implement a height-locking mechanism that is engaged by mechanically coupling one component with another having a finite number of teeth with a corresponding finite number of lock positions and bed heights. However, when a user activates such locks (e.g., by pressing a button), some unwanted axial movement of the endpiece occurs as the lock adjusts to one of the finite number of lock positions. Accordingly, conventional column height locks often produce either a void above the bed surface or over compression of the packed bed, both of which diminish the performance of the chromatography columns.

The present disclosure addresses this problem by providing a height-locking mechanism that can be activated at any bed height without unwanted axial movement of the endpiece into or out of the column. Specifically, the height-locking mechanisms of the present disclosure are activated by mechanically decoupling (as opposed to coupling) complementary locking structures wherein the mechanical decoupling can be performed at any bed height without unwanted axial movement of the endpiece into or out of the column. Accordingly, embodiments of the chromatography columns described herein offer improved performance relative to existing chromatography columns as a result of their ability to avoid both over compression of the packed bed and the creation of voids above the surface of the packed bed.

Some embodiments of the present disclosure are directed to an adapter assembly for a chromatography column, the adapter assembly comprising: an inner end cap comprising a sidewall having a threaded surface configured for threaded engagement with an end of a main tube assembly of the chromatography column; an outer end cap coupled to the inner end cap, wherein the outer end cap surrounds the inner end cap and is axially constrained with respect to the inner end cap; an inlet endpiece coupled to the inner end cap, wherein the inlet endpiece is axially constrained with respect to the inner end cap such that rotation of the inner end cap causes axial movement of the inlet endpiece within a main tube of the main tube assembly, and wherein the inlet endpiece comprises an elongated stem comprising: a proximal end; and a distal end opposite the proximal end along a longitudinal direction of the elongated stem, wherein the distal end is configured for insertion into the main tube of the chromatography column; and a translating member slidably coupled to the outer end cap to allow movement of the translating member in a transverse direction of the adapter assembly that is perpendicular to an axial direction of the adapter assembly. The translating member comprises a first locking structure and the inner end cap comprises a second locking structure. When the translating member is in an engaged position, the first locking structure of the translating member is mechanically coupled with the second locking structure of the inner end cap to rotationally constrain the inner end cap and the outer end cap with respect to each other such that rotation of the outer end cap causes axial movement of the inlet endpiece within the main tube. When the translating member is in a release position, the first locking structure of the translating member is mechanically decoupled from the second locking structure of the inner end cap such that the inner end cap and the outer end cap are rotationally unconstrained with respect to each other and rotation of the outer end cap does not cause axial movement of the inlet endpiece within the main tube.

Embodiments of the present disclosure are also directed to a chromatography column comprising: a main tube assembly comprising: a first end; a second end opposite the first end along an axial direction of the main tube assembly; a main tube extending between the first end and the second end; and a retainer coupled to the main tube at the first end of the main tube assembly; and an adapter assembly as described herein, wherein the inner end cap is in threaded engagement with the retainer of the main tube assembly.

Additional features and advantages of the embodiments described herein will be set forth in the detailed description which follows, and in part will be readily apparent to those skilled in the art from that description or recognized by practicing the embodiments described herein, including the detailed description which follows as well as the appended drawings.

It is to be understood that both the foregoing general description and the following detailed description describe various embodiments and are intended to provide an overview or framework for understanding the nature and character of the subject matter of the present disclosure. The accompanying drawings are included to provide a further understanding of the various embodiments, and are incorporated into and constitute a part of this specification. The drawings illustrate the various embodiments described herein, and together with the description serve to explain the principles and operations of the subject matter of the present disclosure.

### BRIEF DESCRIPTION OF THE DRAWINGS

The embodiments set forth in the drawings are illustrative and exemplary in nature and not intended to limit the subject matter of the present disclosure. The following detailed description of the illustrative embodiments can be understood when read in conjunction with the following drawings, where like structure is indicated with like reference numerals and in which:
FIG. 1 schematically depicts a chromatography column, according to one or more embodiments described herein;
FIG. 2 schematically depicts a cross-section of an inlet adapter assembly for a chromatography column, according to one or more embodiments described herein;
FIG. 3 schematically depicts a distal end of an elongated stem of an inlet endpiece having a porous support plate coupled thereto, according to one or more embodiments described herein;
FIG. 4A schematically depicts a partial cut-away view of an inlet adapter assembly provided with a height-locking mechanism in an activated state wherein a translating member of the adapter assembly is in a release position, according to one or more embodiments described herein;
FIG. 4B is a perspective cross-sectional view of the inlet adapter assembly shown in FIG. 4A, according to one or more embodiments described herein;
FIG. 4C is a partial cut-away top view of the inlet adapter assembly shown in FIG. 4A, according to one or more embodiments described herein;
FIG. 5A schematically depicts a partial cut-away view of an inlet adapter assembly provided with a height-locking mechanism in a deactivated state wherein the translating member of the adapter assembly is in a locking position, according to one or more embodiments described herein;
FIG. 5B is a perspective cross-sectional view of the inlet adapter assembly shown in FIG. 5A, according to one or more embodiments described herein;
FIG. 5C is a cut-away top view of the inlet adapter assembly shown in FIG. 5A, according to one or more embodiments described herein;
FIG. 6A schematically depicts an inlet adapter assembly having alignment features, according to one or more embodiments described herein;
FIG. 6B schematically depicts an inner end cap of the inlet adapter assembly shown in FIG. 6A, according to one or more embodiments described herein;
FIG. 7A schematically depicts a perspective view of an inlet adapter assembly provided with a height-locking mechanism in an activated state wherein a translating member of the adapter assembly is in a release position, according to one or more embodiments described herein;
FIG. 7B is a perspective cross-sectional view of the inlet adapter assembly shown in FIG. 7A, according to one or more embodiments described herein;
FIG. 7C is another perspective cross-sectional view of the inlet adapter assembly shown in FIG. 7A, according to one or more embodiments described herein;
FIG. 8A schematically depicts a perspective view of an inlet adapter assembly provided with a height-locking mechanism in an deactivated state wherein a translating member of the adapter assembly is in a locking position, according to one or more embodiments described herein;
FIG. 8B is a perspective cross-sectional view of the inlet adapter assembly shown in FIG. 8A, according to one or more embodiments described herein;
FIG. 8C is another perspective cross-sectional view of the inlet adapter assembly shown in FIG. 8A, according to one or more embodiments described herein;
FIG. 8D is a perspective partial cut-away view of the inlet adapter assembly shown in FIG. 8A, according to one or more embodiments described herein; and
FIG. 8E is a magnified partial cut-away view of the inlet adapter assembly shown in FIG. 8D, according to one or more embodiments described herein.

### DETAILED DESCRIPTION

Reference will now be made in greater detail to various embodiments, some embodiments of which are illustrated in the accompanying drawings. Whenever possible, the same reference numerals will be used throughout the drawings to refer to the same or similar parts.

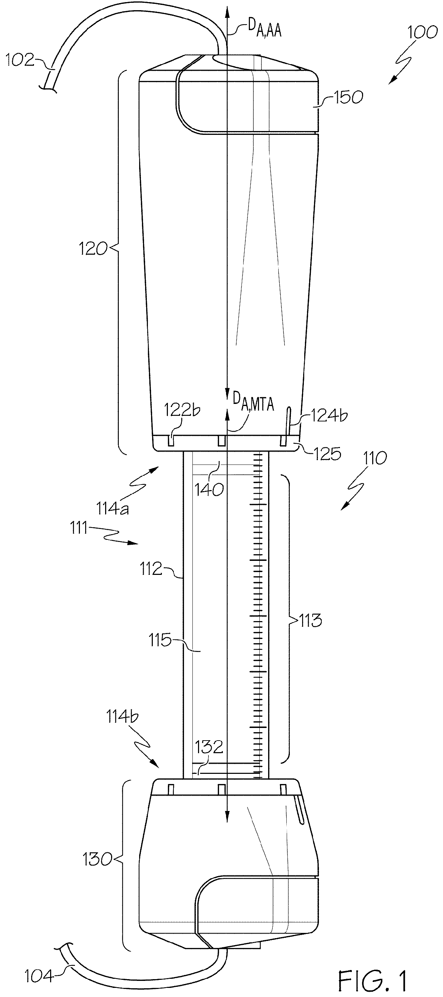

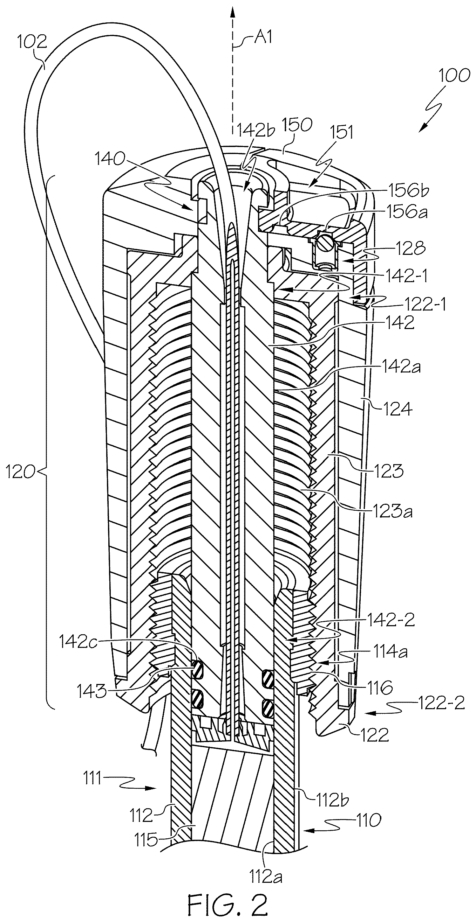

Referring now to FIGS. 1 and 2, an embodiment of a chromatography column 100 is now discussed in detail. The chromatography column 100 comprises a main tube assembly 110, an inlet adapter assembly 120, and an outlet adapter assembly 130. The main tube assembly 110 comprises a main tube 111 having a tubular sidewall 112 extending between a first, inlet end 114a of the main tube assembly 110 and a second, outlet end 114b of the main tube assembly 110, wherein the outlet end 114b is opposite the inlet end 114a along an axial direction D_{A,MTA} of the main tube assembly 110. The axial direction D_{A,MTA} of the main tube assembly 110 may be defined by a central axis of the main tube 111. The tubular sidewall 112 comprises an inner surface 112a and an outer surface 112b. The inlet adapter assembly 120 comprises an inlet endpiece 140 and the outlet adapter assembly 130 comprises an outlet endpiece 132, which together with the inner surface 112a of the tubular sidewall 112, define a reservoir 113 within the main tube 111 for containing a stationary phase 115. In embodiments, the stationary phase 115 may be contained within the reservoir 113 between an inlet porous support plate (not shown in FIGS. 1 and 2) coupled to the inlet endpiece 140 and an outlet porous support plate (not shown) coupled to the outlet endpiece 132. The stationary phase 115 may be loaded via a process called packing to form a packed bed, and typically comprises alumina, silica, or synthetic or natural polymer gel resin beads ranging in size from one micron to several hundred microns.

The main tube assembly 110 may further comprise an inlet retainer 116 coupled to the main tube 111 at the inlet end 114a and an outlet retainer (not shown) coupled to the main tube 111 at the outlet end 114b. The inlet retainer 116 is configured for connection with the inlet adapter assembly 120. The outlet retainer is configured for connection with the outlet adapter assembly 130 and may be structurally identical to the inlet retainer 116. The chromatography column 100 may further comprise an inlet tube 102 in fluid connection with the inlet adapter assembly 120 and an outlet tube 104 in fluid connection with the outlet adapter assembly 130. The inlet tube 102 is configured to deliver fluid (e.g., a mixture in a mobile phase) to the inlet adapter assembly 120, which then delivers the fluid to the reservoir 113. In operation, the fluid introduced to the main tube assembly 110 is forced to migrate through the stationary phase 115, which effects separation of components within the mixture contained in the fluid. Once the mixture has been delivered to the reservoir, additional mobile phase liquid (e.g., buffer or solvent) may be delivered to and through the main tube assembly 110 to further effect separation of components within the mixture. The outlet tube 104 receives the fractionated mixture, carried by the eluent, from the outlet adapter assembly 130 as it exits the reservoir 113.

In embodiments, the inlet adapter assembly 120 comprises an inner end cap 122 and an outer end cap 124 surrounding the inner end cap 122, and the inlet endpiece 140 may be coupled to the inner end cap 122. The inner end cap 122 may be coupled to the inlet end 114a of the main tube assembly 110, for example, via a threaded connection with the inlet retainer 116 of the main tube assembly 110. For example, the inner end cap 122 may comprise a sidewall 123 having a threaded surface 123a (e.g., an interior threaded surface) configured for threaded engagement with the inlet end 114a of the main tube assembly 110. In embodiments, the inlet endpiece 140 is axially constrained with respect to the inner end cap 122 such that rotation of the inner end cap 122 relative to the main tube assembly 110 causes axial movement of the inlet endpiece 140 within a main tube 111 of the main tube assembly 110. Specifically, rotating the inner end cap 122 relative to the main tube assembly 110 causes the inlet adapter assembly 120 to move axially toward or away (depending on the type of threaded connection and the direction of rotation) from the main tube assembly 110. Moreover, axial movement of the inlet adapter assembly 120 causes a corresponding axial movement of the inlet endpiece 140 into and out the main tube 111. Therefore, rotation of the inner end cap 122 relative to the main tube assembly 110 may be used to control the axial position of the inlet endpiece 140 and the corresponding level of compression on the stationary phase 115 provided in the reservoir 113 of the main tube assembly 110.

The inner end cap 122 may be further coupled to the outer end cap 124 via corresponding features on the inner end cap 122 and the outer end cap 124. For example, one or more projections (not shown) in the outer end cap 124 may be configured for engagement with corresponding one or more grooves (not shown) provided in the inner end cap 122, or vice versa. In embodiments, the inner end cap 122 is axially constrained with respect to the outer end cap 124, for example, via interlocking structural features of the inner end cap 122, the outer end cap 124, and the inlet endpiece 140, as shown in FIG. 2 at the proximal end of the inlet endpiece 140. In this manner, the inner end cap 122 and outer end cap 124 may be axially fixed with respect to each other, but capable of rotating with respect to each other around a central axis A1 of the chromatography column 100.

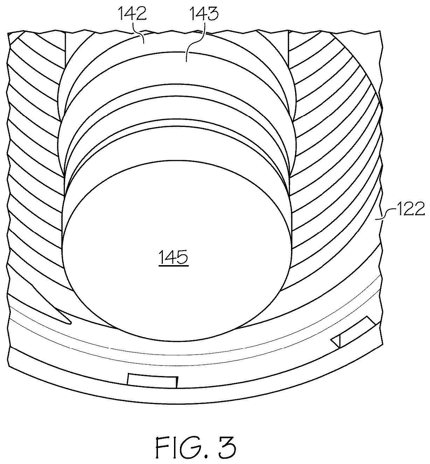

The inlet endpiece 140 may comprise an elongated stem 142 with an outer surface 142a and a bore 142b extending longitudinally through the elongated stem 142. In some embodiments, the bore 142b may be a central bore that extends axially through the elongated stem 142. However, in other embodiments, the bore 142b may be at least partially open-sided to form an elongated recess or slot along the length of the elongated stem 142. The elongated stem 142 comprises a proximal end 142-1 and a distal end 142-2 opposite the proximal end 142-1 along a longitudinal direction of the elongated stem 142, wherein the distal end 142-2 is configured for insertion into the main tube 111 of the chromatography column 100. The bore 142b may be configured to receive the inlet tube 102 which may extend through the bore 142b from the proximal end 142-1 to the distal end 142-2, as shown in FIG. 2. One or more O-rings 143 may be provided around the outer surface 142a (e.g., in corresponding O-ring grooves 142c) near the distal end 142-2 of the elongated stem 142 for providing a fluidic seal between the outer surface 142a of the elongated stem 142 and the inner surface 112a of the tubular sidewall 112. FIG. 3 shows the inlet endpiece 140 with a porous support plate 145 (e.g., a bed support frit or mesh) coupled to the distal end of the elongated stem 142. The porous support plate 145 may be any suitable frit or mesh known to those skilled in the art.

The diameter of the chromatography column can vary significantly depending on the particular application and chromatographic separations to be performed. In some embodiments, the diameter (inner or outer) of the column may be from 3 mm to 2,000 mm. In some specific embodiments, the diameter of the column may be from 3 mm to 100 mm, from 3 mm to 50 mm, from 3 mm to 25 mm, or from 3 mm to 10 mm.

The axial position of the inlet adapter assembly 120 relative to the main tube assembly 110 (i.e., along the central axis A1 of the chromatography column 100) may be modified by movement of the inlet adapter assembly 120 toward or away from the main tube assembly 110, e.g., via adjustment of a threaded connection (shown in FIG. 2) between the inner end cap 122 of the inlet adapter assembly 120 and the inlet retainer 116 of the main tube assembly 110. The O-rings 143 and threaded connection and between the inner end cap 122 and the inlet retainer 116 may provide sufficient friction such that without manual rotation of the inner end cap 122 relative to the main tube assembly 110, the inlet endpiece 140 will not be movable into and out of the main tube 111. However, as discussed in more detail herein, the height-locking mechanism described herein may be activated such that the outer end cap 124 and the inner end cap 122 are rotationally unconstrained from one another, thereby preventing manual rotation of the inner end cap 122 via rotation of the outer end cap 124 as well as corresponding axial movements of the inlet endpiece 140 relative to the main tube assembly 110.

In particular, as noted hereinabove, the height-locking mechanism of the present disclosure can be activated at any bed height without inadvertent axial movement of the inlet endpiece 140 into or out of the main tube 11. As described hereinabove, the stationary phase 115 is typically a hydrated packed bed having its bed height and bed compression controlled via adjustment of the axial position of the inlet endpiece 140. However, when setting the bed height via adjustment of the axial position of the inlet endpiece 140, it is important to avoid over compressing the packed bed via inadvertent downward movement of the inlet endpiece 140. It is also important to avoid creating voids above the surface of the packed bed via inadvertent upward movement of the inlet endpiece 140. Such inadvertent disturbances to the packed bed may also result in "channeling" between particles leading to uneven flow in the bed and thereby causing mixing of the separated discs in the packed bed itself. When activated, the height-locking mechanism described herein prevents adjustment of the axial position of the inlet endpiece 140. Accordingly, chromatography columns implementing the height-locking mechanism described herein offer improved performance relative to existing chromatography columns as a result of their ability to avoid both over compression of the packed bed and the creation of voids above the surface of the packed bed.

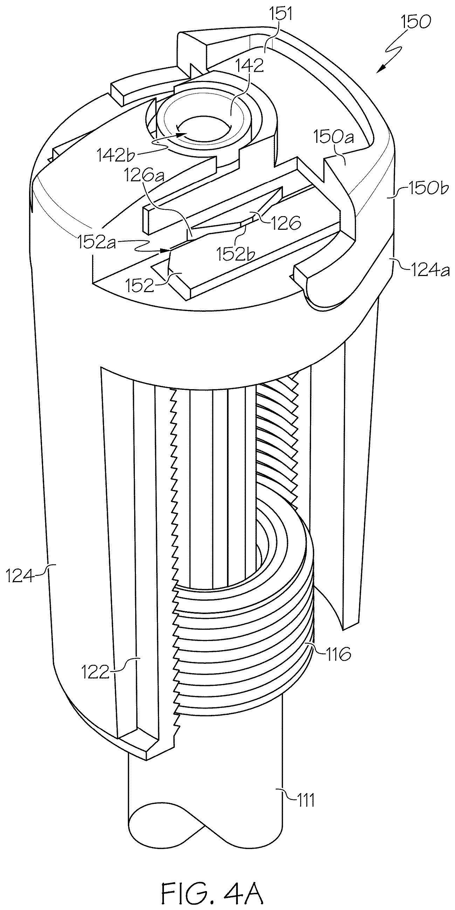

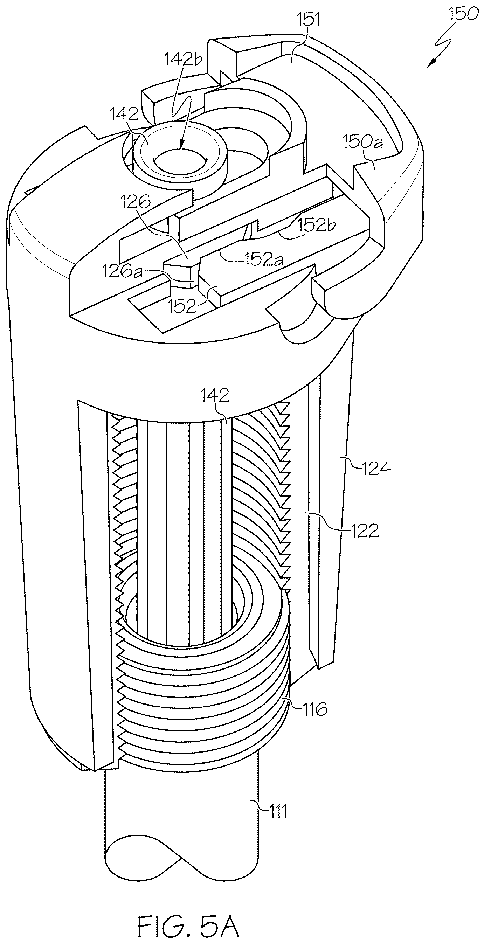

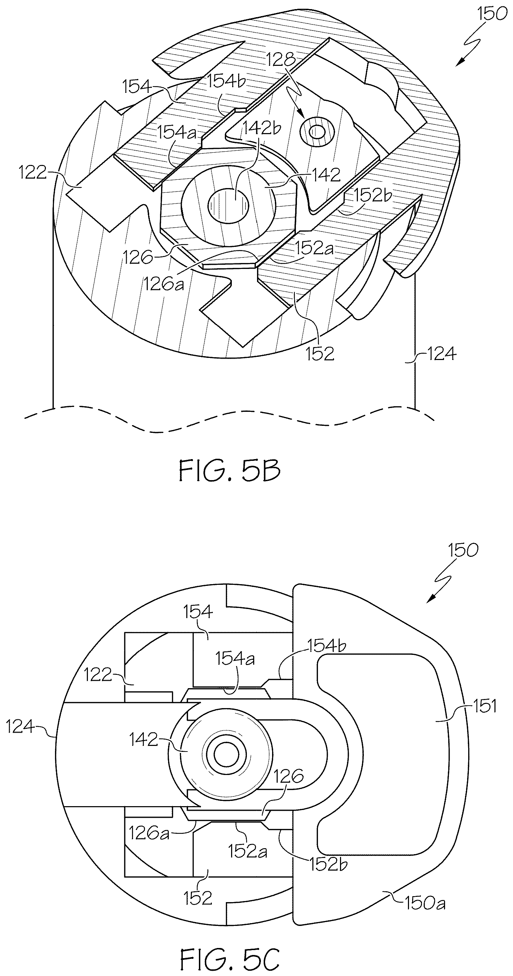

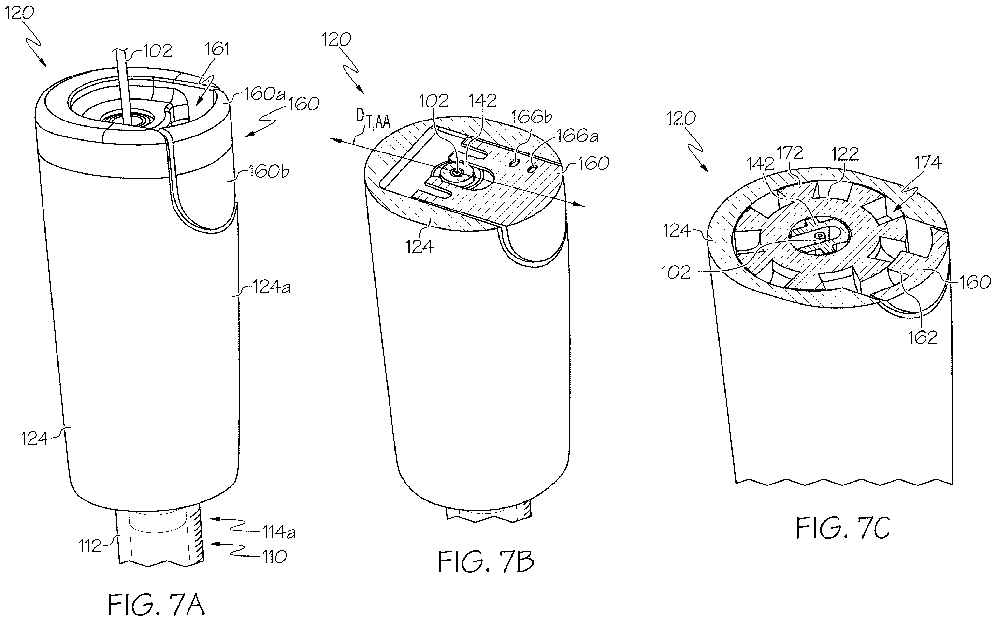

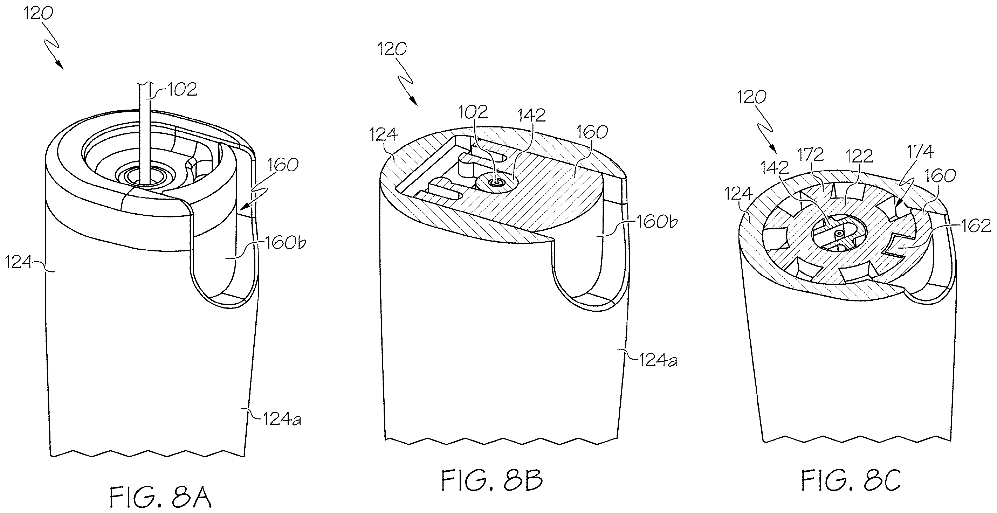

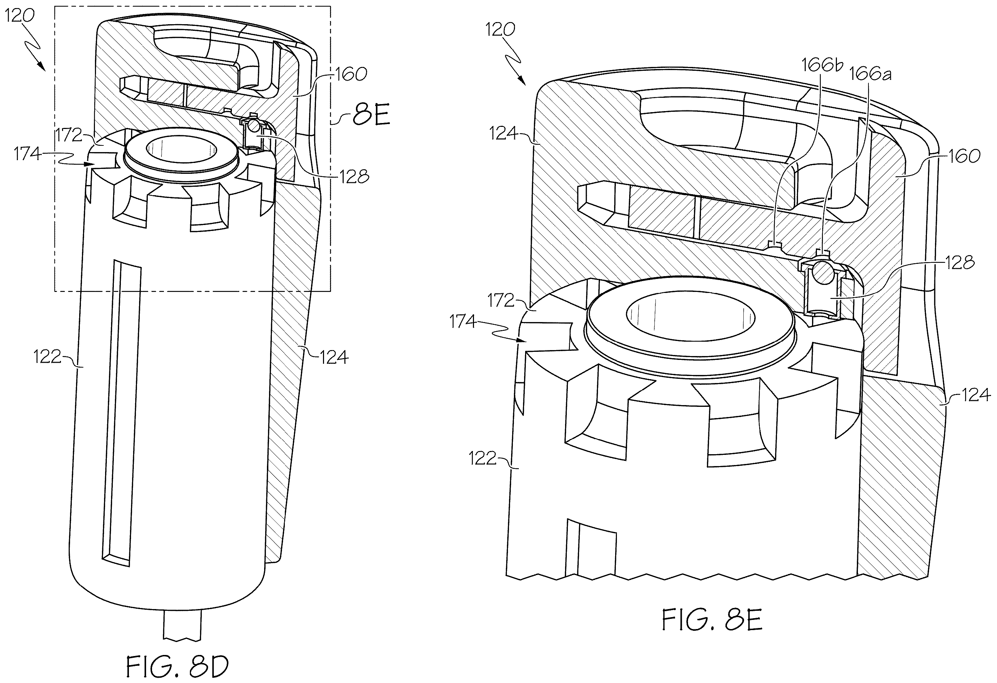

In embodiments, the height-locking mechanism of the inlet adapter assembly 120 includes a translating member 150, 160. In some embodiments, the translating member 150, 160 may axially constrain the outer end cap 124 with respect to the inner end cap 122, as shown in FIG. 2. The translating member 150, 160 may be slidably coupled to the outer end cap 124 to allow movement of the translating member 150, 160 in a transverse direction of the inlet adapter assembly 120 that is perpendicular to an axial direction of the inlet adapter assembly 120, which may be coaxial with the axial direction of the main tube assembly 110 and the central axis A1 of the chromatography column 100. For example, the translating member 150, 160 and the outer end cap 124 may be provided with corresponding structural features that allow for sliding engagement of these components with respect to each other. In embodiments, the translating member 150, 160 may be provided with a grip element, e.g., a recess 151, 161 extending downward from an upper surface 150a, 160a of the translating member 150, 160 and configured to allow a user to adjust the position of the translating member 150, 160 from a radially inward position (see FIGS. 4A-4C and FIGS. 8A-8F) to a radially outward position (see FIGS. 5A-5C and FIGS. 7A-7C).

The translating member 150, 160 may comprise a first locking structure and the inner end cap 122 may comprise a second locking structure, which may be complementary to the first locking structure. When the translating member 150, 160 is in a release position (radially inward position in the embodiment shown in FIGS. 4A-4C), the first locking structure of the translating member 150, 160 is mechanically decoupled from the second locking structure of the inner end cap 122 such that the inner end cap 122 and the outer end cap 124 are rotationally unconstrained with respect to each other and rotation of the outer end cap 124 does not cause axial movement of the inlet endpiece 140 within the main tube 111. Accordingly, when the translating member 150, 160 is in the release position, a user may rotate (e.g., inadvertently) the outer end cap 124 while keeping the inlet endpiece 140 at the same height within the main tube 111, thereby preventing inadvertent adjustment of the compression level of the packed bed (i.e., avoiding inadvertent over compression of the bed as well as the formation of voids above the bed surface).

When the translating member 150, 160 is in an engaged position (radially outward position in the embodiment shown in FIGS. 5A-5C), the first locking structure of the translating member 150, 160 is mechanically coupled with the second locking structure of the inner end cap 122 to rotationally constrain the inner end cap 122 and the outer end cap 124 with respect to each other such that rotation of the outer end cap 124 causes axial movement of the inlet endpiece 140 within the main tube 111. Accordingly, when the translating member 150, 160 is in the engaged position, a user may adjust the axial position of the inlet endpiece 140, and the associated bed height, via rotation of the outer end cap 124. Significantly, in contrast to conventional chromatography columns and height-locking mechanisms, the height-locking mechanism described herein may be activated by mechanically decoupling the first and second locking structures at any bed height without unwanted axial movement of the endpiece into or out of the column.

In some embodiments, the translating member 150 is in the release position when at least a portion of an outer surface 150b of the translating member 150 forms a substantially continuous surface with an adjacent portion of an outer surface 124a of the outer end cap 124 (i.e., to form a substantially continuous profile with a small gap where the translating member 150 meets the outer end cap 124). In some embodiments, the translating member 150 is in the engaged position when the at least a portion of the outer surface 150b of the translating member 150, 160 is offset in the transverse direction D_{T,AA} from the adjacent portion of the outer surface 124a of the outer end cap 124.

In some embodiments, a spring plunger 128 (e.g., ball or pin type) may be mounted to the outer end cap 124 adjacent to the translating member 150, 160 and the translating member 150, 160 may comprise an outer notch 156a, 166a and an inner notch 156b, 166b. The translating member 150, 160 may be maintained in the release position via engagement between the spring plunger 128 and one of the inner notch 156b, 166b or the outer notch 156a, 166a, and the translating member 150, 160 is maintained in the engaged position via engagement between the spring plunger 128 and the other of the inner notch 156b, 166b or the outer notch 156a, 166a. In other embodiments, a spring plunger may be mounted to the translating member 150 and configured to engage with inner and outer notches of the outer end cap 124 so as to maintain the translating member 150 in the engaged and release positions. The translating member (150) may be moved from the release position to the locking position via application of a transverse force in the corresponding direction that exceeds a threshold transverse force associated with the spring plunger 128.

Referring again to FIGS. 4A-5C, in some embodiments, the first locking structure of the translating member 150 may comprises at least one locking arm 152, 154 that extends in the transverse direction D_{T,AA} adjacent to the inlet endpiece 140, wherein the each locking arm 152, 154 of the at least on locking arm 152, 154 comprises a locking surface 152a, 154a that faces toward the inlet endpiece 140 in a direction perpendicular to both the axial direction D_{A,AA} and the transverse direction D_{T,AA}, and a recess 151 that faces toward the inlet endpiece 140 in the direction perpendicular to both the axial direction D_{A,AA} and the transverse direction D_{T,AA}. The second locking structure of the inner end cap 122 may comprise an upward protrusion 126 at a proximal end 122-1 of the inner end cap 122, the upward protrusion 126 comprising a plurality of radially outward facing surfaces 126a.

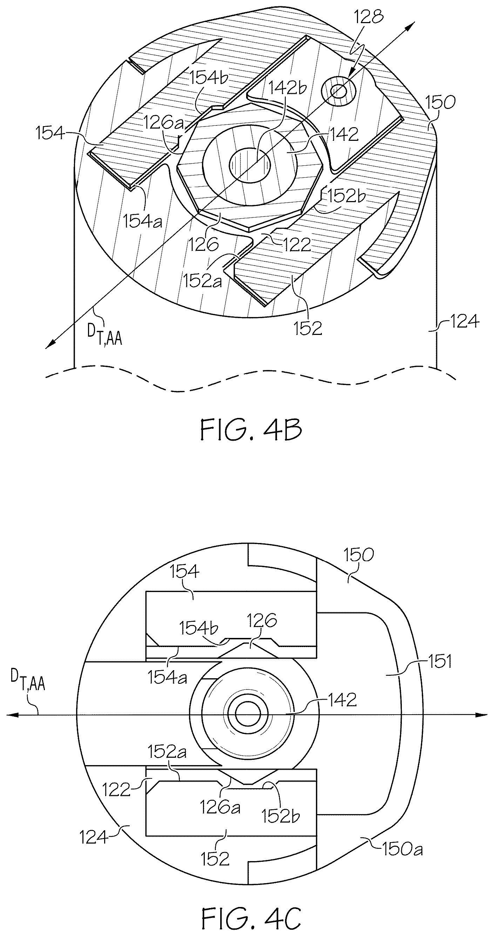

Referring to the embodiment shown in FIGS. 4A-4C, when the translating member 150 is in the release position, the recess 151 is radially adjacent to the upward protrusion 126 and the outer end cap 124 is able to rotate about the axial direction of the adapter assembly 120 without causing contact between the at least one locking arm 152, 154 and the upward protrusion 126. For example, as more clearly seen in FIGS. 4B and 4C, vertical edges connecting adjacent outward facing surfaces 126a of the upward protrusion 126 may enter the recess 152b, 154b without contacting the surfaces defining the recess 152b, 154b or other portions of the locking arm 152, 154. By aligning the locking surface 152a, 154a with a radially outward facing surface 126a of the upward protrusion, the translating member 150 may then be moved radially outward into the engaged position wherein the locking arm 152, 154 is mechanically coupled with the upward protrusion 126 of the inner end cap 122, as discussed in more detail below.

Referring now to the FIGS. 5A to 5C, in this embodiment, when the translating member 150 is in the engaged position, the locking surface 152a, 154a is radially adjacent to the upward protrusion 126 such that contact between the locking surface 152a, 154a and one of the plurality of radially outward facing surfaces 126a of the upward protrusion 126 causes the inner end cap 122 and the outer end cap 124 to be rotationally constrained with respect to each other. Specifically, when a user rotates the outer end cap 124 relative to the main tube assembly 110, the translating member 150 is subject to the same rotation as the outer end cap 124, and the inner end cap 122, mechanically coupled with the translating member 150, is also subject to same rotation. Moreover, due to the threaded engagement between the inner end cap 122 and the inlet end 114a of the main tube assembly 110, and further due to the axial constrained inlet endpiece 140 relative to the inner end cap 122, this rotation of the inner end cap 122 effects an axial movement of the inlet endpiece 140 thereby allowing the user to adjust the bed height of the chromatography column 100. Once the desired bed height is achieved, the user may move the translating member 150 from the radially outward, engaged position shown in FIGS. 5A-5C to the radially inward, release position shown in FIGS. 4A-4C, thereby activating the height-locking mechanism and preventing further adjustments to the axial position of the bed height.

In some embodiments, the plurality of radially outward facing surfaces 126a of the upward protrusion may comprise 4, 6, 8, or 10 radially outward facing surfaces 126a.

In some embodiments, the at least one locking arm comprises a first locking arm 152 and a second locking arm 154 positioned on an opposite side of the inlet endpiece 140 relative to the first locking arm 152. The first locking arm 152 may comprise a first locking surface 152a and first recess 152b both of which face toward the inlet endpiece 140 in the direction perpendicular to both the axial direction D_{A,AA} and the transverse direction D_{T,AA}. The second locking arm 154 may comprise a second locking surface 154a and second recess 154b both of which face toward the inlet endpiece 140 in the direction perpendicular to both the axial direction and the transverse direction. When the translating member 150 is in the release position, the first recess 152b and the second recess 154b are radially adjacent to the upward protrusion 126 on opposite sides of the upward protrusion 126 and the outer end cap 124 is able to rotate about the axial direction of the adapter assembly 120, 130 without causing contact between the first locking arm 152 or the second locking arm 154 and the upward protrusion 126. When the translating member 150 is in the engaged position, the first locking surface 152a and second locking surface 154a are radially adjacent to the upward protrusion 126 on opposite sides of the upward protrusion 126 such that contact between the first locking surface 152a and the second locking surface 154a with oppositely facing surfaces of the plurality of radially outward facing surfaces 126a of the upward protrusion 126 causes the inner end cap 122 and the outer end cap 124 to be rotationally constrained with respect to each other.

In the embodiment depicted in FIGS. 4A-5C, the translating member 150 may be maintained in the release position via engagement between the spring plunger 128 and the outer notch 156a and maintained in the engaged position via engagement between the spring plunger 128 and the inner notch 156b.

In some embodiments, the inner end cap 122 may be provided with a plurality of inner alignment indicators 122b on an outer surface 125 (see FIG. 1) of the inner end cap 122 which, when aligned with an outer alignment indicator 124b of the outer end cap 124, indicate that the first locking surface 152a is parallel with one of plurality of radially outward facing surfaces 126a of the upward protrusion 126 and that the translating member 150 is movable in the transverse direction to transition from the release position to the engaged position. For example, with respect to the embodiment shown in FIG. 1, an exposed portion of the inner end cap 122 may be provided with the plurality of inner alignment indicators 122b which, when aligned with an outer alignment indicator 124b of the outer end cap 124, indicate that the first locking surface 152a is parallel with one of plurality of radially outward facing surfaces 126a of the upward protrusion 126.

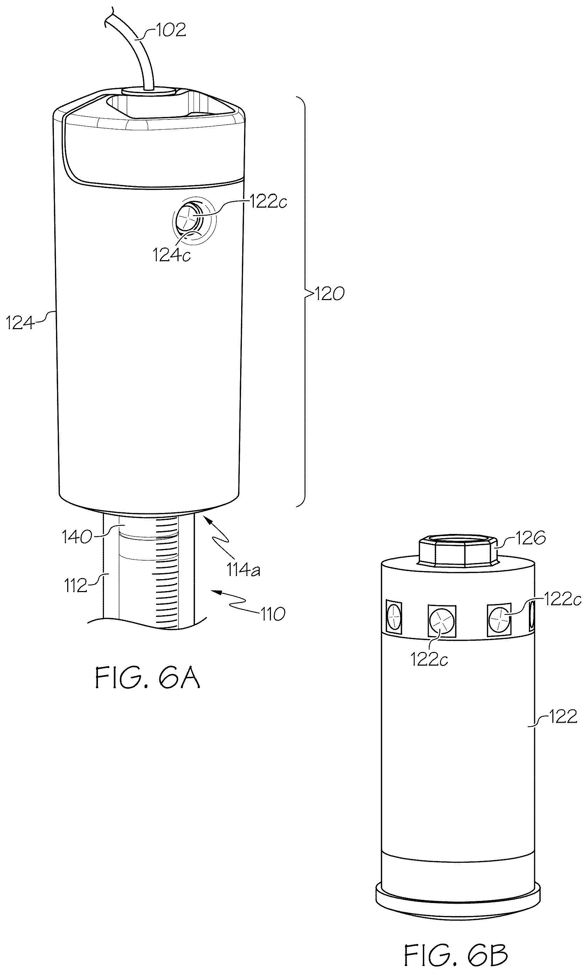

Referring now to FIGS. 6A and 6B, in some embodiments, the inner end cap 122 may be provided with a plurality of inner alignment indicators 122c that are obscured from view except when aligned with a corresponding outer alignment indicator 124c of the outer end cap 124. The plurality of inner alignment indicators 122c and the outer alignment indicator 124c are positioned on the inner end cap 122 and the outer end cap 124, respectively, such as to be at the same axial position of the inlet adapter assembly 120. The outer alignment indicator 124c is configured to allow visibility of the inner end cap 122, particularly, the inner alignment indicators 122c of the inner end cap 122 as the outer end cap 124 rotates relative to the inner end cap 122. In the embodiment depicted in FIGS. 6A and 6B, the outer alignment indicator 124c is a circular hole through the wall of the outer end cap 124 and the inner alignment indicators 122c are circular markers on the inner end cap 122. However, it should be understood that the outer alignment indicator 124c and the inner alignment indicators 122c may be any suitable shape.

Referring not to the embodiment shown in FIGS. 7A-8E, the inlet adapter assembly 120 of the present disclosure may comprise a translating member 160 that, in contrast to the embodiment shown in FIGS. 4A-5C, is in the engaged position when the translating member 160 is in a radially inward position and the release position when the translating member 160 is in a radially outward position. In such embodiments, the first locking structure of the translating member 160 may comprise a locking protrusion 162 that extends in the transverse direction toward the inlet endpiece 140, and the second locking structure of the inner end cap 122 may comprise a plurality of teeth 172 at the proximal end 122-1 of the inner end cap 122 and a plurality of radially outward facing cavities 174 defined by a circumferentially adjacent teeth 172, as shown in FIGS. 7C and 8C.

Referring now to FIGS. 7A-7C, when the translating member 160 is in the release position (radially outward), the outer end cap 124 is able to rotate about the axial direction of the inlet adapter assembly 120 without causing contact between the locking protrusion 162 and the plurality of teeth 172. Accordingly, rotation of the outer end cap 124 will not cause a corresponding rotation of the inner end cap 122, thereby maintaining the axial position of the inlet endpiece 140 despite rotation of the outer end cap 124. By aligning the locking protrusion with one of the plurality of radially outward facing cavities 174, the translating member 160 may then be moved radially inward into the engaged position wherein the locking protrusion is mechanically coupled with the teeth 172 of the inner end cap 122, as discussed in more detail below.

Referring now to FIGS. 8A-8C, when the translating member 160 is in the engaged position, the locking protrusion 162) is received within one of the plurality of cavities 174 such that the inner end cap 122 and the outer end cap 124 are rotationally constrained with respect to each other. Thus, when a user rotates the outer end cap 124 relative to the main tube assembly 110, the translating member 160 is subject to the same rotation as the outer end cap 124, and the inner end cap 122, mechanically coupled with the translating member 160, is also subject to same rotation. Moreover, due to the threaded engagement between the inner end cap 122 and the inlet end 114a of the main tube assembly 110, and further due to the axial constrained inlet endpiece 140 relative to the inner end cap 122, this rotation of the inner end cap 122 effects an axial movement of the inlet endpiece 140 thereby allowing the user to adjust the bed height of the chromatography column 100. Once the desired bed height is achieved, the user may move the translating member 160 from the radially inward, engaged position shown in FIGS. 8A-8E to the radially outward, release position shown in FIGS. 7A-7C, thereby activating the height-locking mechanism and preventing further adjustments to the axial position of the bed height.

In some embodiments, the plurality of teeth 172 may comprise from 3 to 12 teeth, such as, for example, 7 teeth as shown for the embodiment depicted in FIGS. 7A-8E. However, in larger columns, the plurality of teeth 172 may include 100 teeth or more. Moreover, in the embodiment depicted in FIGS. 7A-8E, the translating member 160 may be maintained in the release position via engagement between the spring plunger 128 and the inner notch 156b and maintained in the engaged position via engagement between the spring plunger 128 and the outer notch 156a.

It should be understood that the description herein with respect to the inlet adapter assembly 120 and the height-locking mechanism could also be for the outlet adapter assembly 130 to prevent inadvertent axial movement of the outlet endpiece 132 into and out of the main tube 111. Accordingly, the outlet adapter assembly 130 may comprise substantially the same design features as the inlet adapter assembly 120, having an outlet endpiece similar to the inlet endpiece and inner and outer end caps similar to the inner and outer end caps 122, 124 of the inlet adapter assembly 120.

Without wishing to be bound by theory, it is believed the chromatography column height-locking mechanisms described herein may significantly improve the quality of chromatographic separations by allowing for precise and stable control of the bed height, thereby avoiding voids and/or over-compressed regions at the surface and within the packed bed. Specifically, the absence of voids and/or over-compressed regions in the packed bed, as well as the avoidance of "channeling" between particles which may result from such voids and over-compressed regions, may reduce the mixing of flat discs of fluid in the chromatography column, thereby improving the chromatographic performance of the packed bed and the ability of the packed bed to efficiently separate components of the sample bolus into separate discs.

According to a first aspect of the present disclosure, an adapter assembly for a chromatography column comprises: an inner end cap comprising a sidewall having a threaded surface configured for threaded engagement with an end of a main tube assembly of the chromatography column; an outer end cap coupled to the inner end cap, wherein the outer end cap surrounds the inner end cap and is axially constrained with respect to the inner end cap; an inlet endpiece coupled to the inner end cap, wherein the inlet endpiece is axially constrained with respect to the inner end cap such that rotation of the inner end cap causes axial movement of the inlet endpiece within a main tube of the main tube assembly, and wherein the inlet endpiece comprises an elongated stem comprising: a proximal end; and a distal end opposite the proximal end along a longitudinal direction of the elongated stem, wherein the distal end is configured for insertion into the main tube of the chromatography column; and a translating member slidably coupled to the outer end cap to allow movement of the translating member in a transverse direction of the adapter assembly that is perpendicular to an axial direction of the adapter assembly, wherein: the translating member comprises a first locking structure; the inner end cap comprises a second locking structure; when the translating member is in an engaged position, the first locking structure of the translating member is mechanically coupled with the second locking structure of the inner end cap to rotationally constrain the inner end cap and the outer end cap with respect to each other such that rotation of the outer end cap causes axial movement of the inlet endpiece within the main tube; and when the translating member is in a release position, the first locking structure of the translating member is mechanically decoupled from the second locking structure of the inner end cap such that the inner end cap and the outer end cap are rotationally unconstrained with respect to each other and rotation of the outer end cap does not cause axial movement of the inlet endpiece within the main tube.

A second aspect includes the first aspect, wherein the translating member is in the release position when at least a portion of an outer surface of the translating member forms a substantially continuous surface with an adjacent portion of an outer surface of the outer end cap.

A third aspect includes the second aspect, wherein the translating member is in the engaged position when the at least a portion of the outer surface of the translating member is offset in the transverse direction from the adjacent portion of the outer surface of the outer end cap.

A fourth aspect includes any one of the first through third aspects, wherein: a spring plunger is mounted to the outer end cap adjacent to the translating member; the translating member comprises an outer notch and an inner notch; the translating member is maintained in the release position via engagement between the spring plunger and one of the inner notch or the outer notch; and the translating member is maintained in the engaged position via engagement between the spring plunger and the other of the inner notch or the outer notch.

A fifth aspect includes any one of the first through third aspects, wherein: the first locking structure comprises at least one locking arm that extends in the transverse direction adjacent to the inlet endpiece, wherein the each locking arm of the at least on locking arm comprises: a locking surface that faces toward the inlet endpiece in a direction perpendicular to both the axial direction and the transverse direction; and a recess that faces toward the inlet endpiece in the direction perpendicular to both the axial direction and the transverse direction; the second locking structure comprises an upward protrusion at a proximal end of the inner end cap, the upward protrusion comprising a plurality of radially outward facing surfaces; when the translating member is in the release position, the recess is radially adjacent to the upward protrusion and the outer end cap is able to rotate about the axial direction of the adapter assembly without causing contact between the at least one locking arm and the upward protrusion; and when the translating member is in the engaged position, the locking surface is radially adjacent to the upward protrusion such that contact between the locking surface and one of the plurality of radially outward facing surfaces of the upward protrusion causes the inner end cap and the outer end cap to be rotationally constrained with respect to each other.

A sixth aspect includes the fifth aspect, wherein the plurality of radially outward facing surfaces comprises 4, 6, 8, or 10 radially outward facing surfaces.

A seventh aspect includes either one of the fifth or sixth aspects, wherein: the at least one locking arm comprises a first locking arm and a second locking arm positioned on an opposite side of the inlet endpiece relative to the first locking arm, wherein: the first locking arm comprises: a first locking surface that faces toward the inlet endpiece in the direction perpendicular to both the axial direction and the transverse direction; and a first recess that faces toward the inlet endpiece in the direction perpendicular to both the axial direction and the transverse direction; the second locking arm comprises: a second locking surface that faces toward the inlet endpiece in the direction perpendicular to both the axial direction and the transverse direction; and a second recess that faces toward the inlet endpiece in the direction perpendicular to both the axial direction and the transverse direction; when the translating member is in the release position, the first recess and the second recess are radially adjacent to the upward protrusion on opposite sides of the upward protrusion and the outer end cap is able to rotate about the axial direction of the adapter assembly without causing contact between the first locking arm or the second locking arm and the upward protrusion; and when the translating member is in the engaged position, the first locking surface and second locking surface are radially adjacent to the upward protrusion on opposite sides of the upward protrusion such that contact between the first locking surface and the second locking surface with oppositely facing surfaces of the plurality of radially outward facing surfaces of the upward protrusion causes the inner end cap and the outer end cap to be rotationally constrained with respect to each other.

An eighth aspect includes any one of the fifth through seventh aspects, wherein: a spring plunger is mounted to the outer end cap adjacent to the translating member; the translating member comprises an inner notch and an outer notch; the translating member is maintained in the release position via engagement between the spring plunger and the outer notch; and the translating member is maintained in the engaged position via engagement between the spring plunger and the inner notch.

A ninth aspect includes any one of the first through third aspects, wherein: the first locking structure comprises a locking protrusion that extends in the transverse direction toward to the inlet endpiece; the second locking structure comprises: a plurality of teeth at the proximal end of the inner end cap; and a plurality of radially outward facing cavities defined by a circumferentially adjacent teeth; when the translating member is in the release position, the outer end cap is able to rotate about the axial direction of the adapter assembly without causing contact between the locking protrusion and the plurality of teeth; and when the translating member is in the engaged position, the locking protrusion is received within one of the plurality of cavities such that the inner end cap and the outer end cap are rotationally constrained with respect to each other.

A tenth aspect includes the ninth aspect, wherein the plurality of teeth comprises from 3 to 12 teeth.

An eleventh aspect includes either one of the ninth or tenth aspects, wherein: a spring plunger is mounted to the outer end cap adjacent to the translating member; the translating member comprises an inner notch and an outer notch; the translating member is maintained in the release position via engagement between the spring plunger and the inner notch; and the translating member is maintained in the engaged position via engagement between the spring plunger and the outer notch.

A twelfth aspect includes any of the first through eleventh aspects, wherein: the inner end cap comprises a plurality of inner alignment indicators on an outer surface of the inner end cap; the outer end cap comprises an outer alignment indicator; and when the outer alignment indicator is aligned with any one of the plurality of inner alignment indicators, the translating member is movable in the transverse direction to transition from the release position to the engaged position.

According to a thirteenth aspect of the present disclosure, a chromatography column comprises: a main tube assembly comprising: a first end; a second end opposite the first end along an axial direction of the main tube assembly; a main tube extending between the first end and the second end; and a retainer coupled to the main tube at the first end of the main tube assembly; the adapter assembly of any one of the first through twelfth aspects, wherein the inner end cap is in threaded engagement with the retainer of the main tube assembly.

A fourteenth aspect includes the thirteenth aspect, wherein the adapter assembly is an inlet adapter assembly coupled to the first end of the main tube assembly.

A fifteenth aspect includes the thirteenth aspect, wherein the adapter assembly is an outlet adapter assembly coupled to the second end of the main tube assembly.

Reference throughout this specification to "one embodiment," "certain embodiments," "various embodiments," "one or more embodiments" or "an embodiment" means that a particular feature, structure, material, or characteristic described in connection with the embodiment is included in at least one embodiment of the disclosure. Thus, the appearances of the phrases such as "in one or more embodiments," "in certain embodiments," "in embodiments," "in various embodiments," "in some embodiments," "in one embodiment," or "in an embodiment" in various places throughout this specification are not necessarily referring to the same embodiment, or to only one embodiment. Furthermore, the particular features, structures, materials, or characteristics may be combined in any suitable manner in one or more embodiments.

It is also understood that, unless otherwise specified, terms such as "top," "bottom," "outward," "inward," and the like are words of convenience and are not to be construed as limiting terms. In addition, whenever a group is described as comprising at least one of a group of elements and combinations thereof, it is understood that the group may comprise, consist essentially of, or consist of any number of those elements recited, either individually or in combination with each other. Similarly, whenever a group is described as consisting of at least one of a group of elements or combinations thereof, it is understood that the group may consist of any number of those elements recited, either individually or in combination with each other. Unless otherwise specified, a range of values, when recited, includes both the upper and lower limits of the range as well as any ranges therebetween.

As used herein, the indefinite articles "a," "an," and the corresponding definite article "the" mean "at least one" or "one or more," unless otherwise specified. It also is understood that the various features disclosed in the specification and the drawings can be used in any and all combinations.

It is noted that the terms "substantially" and "about" may be utilized herein to represent the inherent degree of uncertainty that may be attributed to any quantitative comparison, value, measurement, or other representation. These terms are also utilized herein to represent the degree by which a quantitative representation may vary from a stated reference without resulting in a change in the basic function of the subject matter at issue.

It is noted that recitations herein of a component of the present disclosure being "configured" in a particular way, to embody a particular property, or to function in a particular manner, are structural recitations, as opposed to recitations of intended use. More specifically, the references herein to the manner in which a component is "configured" denotes an existing physical condition of the component and, as such, is to be taken as a definite recitation of the structural characteristics of the component.

Having described the subject matter of the present disclosure in detail and by reference to specific embodiments thereof, it is noted that the various details disclosed herein should not be taken to imply that these details relate to elements that are essential components of the various embodiments described herein, even in cases where a particular element is illustrated in each of the drawings that accompany the present description. Further, it will be apparent that modifications and variations are possible without departing from the scope of the present disclosure.

## Claims

1. An adapter assembly (120, 130) for a chromatography column (100), the adapter assembly (120, 130) comprising:
an inner end cap (122) comprising a sidewall (123) having a threaded surface (123a) configured for threaded engagement with an end of a main tube assembly (110) of the chromatography column (100);
an outer end cap (124) coupled to the inner end cap (122), wherein the outer end cap (124) surrounds the inner end cap (122) and is axially constrained with respect to the inner end cap (122);
an inlet endpiece (140) coupled to the inner end cap (122), wherein the inlet endpiece (140) is axially constrained with respect to the inner end cap (122) such that rotation of the inner end cap (122) causes axial movement of the inlet endpiece (140) within a main tube (111) of the main tube assembly (110), and wherein the inlet endpiece (140) comprises an elongated stem (142) comprising:
a proximal end (142-1); and
a distal end (142-2) opposite the proximal end (142-1) along a longitudinal direction of the elongated stem (142), wherein the distal end (142-2) is configured for insertion into the main tube (111) of the chromatography column (100); and
a translating member (150, 160) slidably coupled to the outer end cap (124) to allow movement of the translating member (150, 160) in a transverse direction of the adapter assembly (120, 130) that is perpendicular to an axial direction of the adapter assembly (120, 130), wherein:
the translating member (150, 160) comprises a first locking structure;
the inner end cap (122) comprises a second locking structure;
when the translating member (150, 160) is in an engaged position, the first locking structure of the translating member (150, 160) is mechanically coupled with the second locking structure of the inner end cap (122) to rotationally constrain the inner end cap (122) and the outer end cap (124) with respect to each other such that rotation of the outer end cap (124) causes axial movement of the inlet endpiece (140) within the main tube (111); and
when the translating member (150, 160) is in a release position, the first locking structure of the translating member (150, 160) is mechanically decoupled from the second locking structure of the inner end cap (122) such that the inner end cap (122) and the outer end cap (124) are rotationally unconstrained with respect to each other and rotation of the outer end cap (124) does not cause axial movement of the inlet endpiece (140) within the main tube (111).

2. The adapter assembly (120, 130) of claim 1, wherein the translating member (150, 160) is in the release position when at least a portion of an outer surface (150b, 160b) of the translating member (150, 160) forms a substantially continuous surface with an adjacent portion of an outer surface (124a) of the outer end cap (124).

3. The adapter assembly (120, 130) of claim 2, wherein the translating member (150, 160) is in the engaged position when the at least a portion of the outer surface (150b, 160b) of the translating member (150, 160) is offset in the transverse direction from the adjacent portion of the outer surface (124a) of the outer end cap (124).

4. The adapter assembly (120, 130) of any one of claims 1 to 3, wherein:
a spring plunger (128) is mounted to the outer end cap (124) adjacent to the translating member (150, 160);
the translating member (150, 160) comprises an outer notch (156a, 166a) and an inner notch (156b, 166b);
the translating member (150, 160) is maintained in the release position via engagement between the spring plunger (128) and one of the inner notch (156b, 166b) or the outer notch (156a, 166a); and
the translating member (150, 160) is maintained in the engaged position via engagement between the spring plunger (128) and the other of the inner notch (156b, 166b) or the outer notch (156a, 166a).

5. The adapter assembly (120, 130) of any one of claims 1 to 3, wherein:
the first locking structure comprises at least one locking arm (152, 154) that extends in the transverse direction adjacent to the inlet endpiece (140), wherein the each locking arm (152, 154) of the at least on locking arm (152, 154) comprises:
a locking surface (152a, 154a) that faces toward the inlet endpiece (140) in a direction perpendicular to both the axial direction and the transverse direction; and
a recess (152b, 154b) that faces toward the inlet endpiece (140) in the direction perpendicular to both the axial direction and the transverse direction;
the second locking structure comprises an upward protrusion (126) at a proximal end (122-1) of the inner end cap (122), the upward protrusion (126) comprising a plurality of radially outward facing surfaces (126a);
when the translating member (150) is in the release position, the recess (151) is radially adjacent to the upward protrusion (126) and the outer end cap (124) is able to rotate about the axial direction of the adapter assembly (120, 130) without causing contact between the at least one locking arm (152, 154) and the upward protrusion (126); and
when the translating member (150) is in the engaged position, the locking surface (152a, 154a) is radially adjacent to the upward protrusion (126) such that contact between the locking surface (152a, 154a) and one of the plurality of radially outward facing surfaces (126a) of the upward protrusion (126) causes the inner end cap (122) and the outer end cap (124) to be rotationally constrained with respect to each other.

6. The adapter assembly (120, 130) of claim 5, wherein the plurality of radially outward facing surfaces (126a) comprises 4, 6, 8, or 10 radially outward facing surfaces (126a).

7. The adapter assembly (120, 130) of either one of claims 5 or 6, wherein:
the at least one locking arm (152, 154) comprises a first locking arm (152) and a second locking arm (154) positioned on an opposite side of the inlet endpiece (140) relative to the first locking arm (152), wherein:
the first locking arm (152) comprises:
a first locking surface (152a) that faces toward the inlet endpiece (140) in the direction perpendicular to both the axial direction and the transverse direction; and
a first recess (152b) that faces toward the inlet endpiece (140) in the direction perpendicular to both the axial direction and the transverse direction;
the second locking arm (154) comprises:
a second locking surface (154a) that faces toward the inlet endpiece (140) in the direction perpendicular to both the axial direction and the transverse direction; and
a second recess (154b) that faces toward the inlet endpiece (140) in the direction perpendicular to both the axial direction and the transverse direction;
when the translating member (150) is in the release position, the first recess (152b) and the second recess (154b) are radially adjacent to the upward protrusion (126) on opposite sides of the upward protrusion (126) and the outer end cap (124) is able to rotate about the axial direction of the adapter assembly (120, 130) without causing contact between the first locking arm (152) or the second locking arm (154) and the upward protrusion (126); and
when the translating member (150) is in the engaged position, the first locking surface (152a) and second locking surface (154a) are radially adjacent to the upward protrusion (126) on opposite sides of the upward protrusion (126) such that contact between the first locking surface (152a) and the second locking surface (154a) with oppositely facing surfaces of the plurality of radially outward facing surfaces (126a) of the upward protrusion (126) causes the inner end cap (122) and the outer end cap (124) to be rotationally constrained with respect to each other.

8. The adapter assembly (120, 130) of any one of claims 5 to 7, wherein:
a spring plunger (128) is mounted to the outer end cap (124) adjacent to the translating member (150);
the translating member (150) comprises an inner notch (156b) and an outer notch (156a);
the translating member (150) is maintained in the release position via engagement between the spring plunger (128) and the outer notch (156a); and
the translating member (150) is maintained in the engaged position via engagement between the spring plunger (128) and the inner notch (156b).

9. The adapter assembly (120, 130) of any one of claims 1 to 3, wherein:
the first locking structure comprises a locking protrusion (162) that extends in the transverse direction toward to the inlet endpiece (140);
the second locking structure comprises:
a plurality of teeth (172) at the proximal end (122-1) of the inner end cap (122); and
a plurality of radially outward facing cavities (174) defined by a circumferentially adjacent teeth (172);
when the translating member (160) is in the release position, the outer end cap (124) is able to rotate about the axial direction of the adapter assembly (120, 130) without causing contact between the locking protrusion (162) and the plurality of teeth (172); and
when the translating member (160) is in the engaged position, the locking protrusion (162) is received within one of the plurality of cavities (174) such that the inner end cap (122) and the outer end cap (124) are rotationally constrained with respect to each other.

10. The adapter assembly (120, 130) of claim 9, wherein the plurality of teeth (172) comprises from 3 to 12 teeth (172).

11. The adapter assembly (120, 130) of either one of claims 9 or 10, wherein:
a spring plunger (128) is mounted to the outer end cap (124) adjacent to the translating member (160);
the translating member (160) comprises an inner notch (156b) and an outer notch (156a);
the translating member (160) is maintained in the release position via engagement between the spring plunger (128) and the inner notch (156b); and
the translating member (160) is maintained in the engaged position via engagement between the spring plunger (128) and the outer notch (156a).

12. The adapter assembly (120, 130) of any one of the preceding claims, wherein:
the inner end cap (122) comprises a plurality of inner alignment indicators (122b, 122c) on an outer surface (125) of the inner end cap (122);
the outer end cap (124) comprises an outer alignment indicator (124b, 124c); and
when the outer alignment indicator (124b, 124c) is aligned with any one of the plurality of inner alignment indicators (122b, 122c), the translating member (150) is movable in the transverse direction to transition from the release position to the engaged position.

13. A chromatography column (100) comprising:
a main tube assembly (110) comprising:
a first end (114a);
a second end (114b) opposite the first end (114a) along an axial direction of the main tube assembly (110);
a main tube (111) extending between the first end (114a) and the second end (114b); and
a retainer (116) coupled to the main tube (111) at the first end (114a) of the main tube assembly (110);
the adapter assembly (120, 130) of any one of claims 1 to 12, wherein the inner end cap (122) is in threaded engagement with the retainer (116) of the main tube assembly (110).

14. The chromatography column (100) of claim 13, wherein the adapter assembly (120, 130) is an inlet adapter assembly (120) coupled to the first end (114a) of the main tube assembly (110).

15. The chromatography column (100) of claim 13, wherein the adapter assembly (120, 130) is an outlet adapter assembly (130) coupled to the second end (114b) of the main tube assembly (110).
